# EUROPEAN PATENT APPLICATION

(11) **EP 3 712 762 A1**
(43) Date of publication of application: **23.09.2020**
(21) Application number: 20161678.6
(22) Date of filing: 06.03.2020
(51) Int. Cl.: G06F 8/36, G06F 8/30, G06F 9/54, G08G 5/00

(54) **METHODS AND SYSTEMS FOR GENERATING AND RECOMMENDING API MASHUPS**

(30) Priority: 19.03.2019 US 201916358422
(71) Applicant: Honeywell International Inc., Morris Plains, NJ 07950 (US)
(72) Inventor: JANAKIRAMAN, Kirupakar, Morris Plains, NJ New Jersey 07950 (US); MOHAN, Rajeev, Morris Plains, NJ New Jersey 07950 (US); RAO, Nayyar Azam Khan, Morris Plains, NJ New Jersey 07950 (US); RAJENDRAN, Ramkumar, Morris Plains, NJ New Jersey 07950 (US)
(74) Representative: Haseltine Lake Kempner LLP

(57) **Abstract**

Disclosed are methods, systems, and non-transitory computer-readable medium for providing application programming interface (API) mashups. For instance, the method may include hosting a plurality of certified FMS micro-services associated with a plurality of FMS APIs; hosting an API mashup generator to perform an API mashup process and an API mashup recommendation process, the API mashup process generating combinations of APIs that include one or more APIs from the plurality of FMS APIs, other avionics APIs, and/or third party APIs; and hosting a service mesh to process a user request from a user device for the API mashup recommendation process or an invoke micro-service process.

## Description

### TECHNICAL FIELD

Various embodiments of the present disclosure relate generally to application program interfaces (APIs) and, more particularly, to methods and systems for generating and recommending API mashups.

### BACKGROUND

Conventionally, businesses developed and marketed products, such as avionics products, that may or may not include embedded software. Generally, products were developed and deployed as standalone products that do not interact with each other. However, recently businesses are expanding into next-generation digital ecosystems by building platforms or hooking into external platforms, in response to changing technology, such as cloud deployment, internet of things (IoT), artificial intelligence (AI), or machine-learning. Therefore, there may be a shift from standalone products to shared, collaborative, and on-demand services, for instance via APIs. APIs may be a set of clearly defined methods of communication among various components. In one aspect, multiple different APIs may be used by a system to enable different services to be combined (e.g., an API mashup). API mashups may enable creation of new applications by combining data and/or services from multiple APIs.

As a number services available via APIs is large and continuing to grow, correctly and efficiently selecting and using an API (or API mashup) manually may be a difficult, time-consuming, and costly activity. For instance, there are thousands of APIs from third parties. As one example, Programmable Web, a public API-related repository, includes the information for 17,682 APIs. Therefore, it may be difficult to manually sift through the services offered by third party APIs and select correct APIs for a specified task. This may be even more difficult when multiple APIs must be combined to provide a service. Moreover, understanding a selected API of an unfamiliar library/service may be a significant challenge due to API documentations not always being complete or being ambiguous. Therefore, one problem may be making service discovery of existing APIs easier, and another problem may be reducing time and/or effort of adopting an existing API.

Additionally, an entity (e.g., a for-profit or non-profit entity) may develop its own APIs (e.g., entity APIs) to provide services to customers or users. Furthermore, combining one or more entity APIs, with or without one or more third party APIs, to provide an API mashup to customers or users may also be a challenge. For instance, it may be a challenge because the number of possible combinations may be large and using the third party APIs may be difficult because of the documentation issues discussed above. Therefore, selecting appropriate entity APIs with or without third party APIs may be an additional problem.

The present disclosure is directed to overcoming one or more of these above-referenced challenges.

### SUMMARY OF THE DISCLOSURE

According to certain aspects of the disclosure, systems and methods are disclosed for generating and recommending API mashups.

For instance, a method may include hosting a plurality of certified FMS micro-services associated with a plurality of FMS APIs; hosting an API mashup generator to perform an API mashup process and an API mashup recommendation process, the API mashup process generating combinations of APIs that include one or more APIs from the plurality of FMS APIs, other avionics APIs, and/or third party APIs; and hosting a service mesh to process a user request from a user device for the API mashup recommendation process or an invoke micro-service process.

A system may include a memory storing instructions; and a processor executing the instructions to perform a process. The process may include hosting a plurality of certified FMS micro-services associated with a plurality of FMS APIs; hosting an API mashup generator to perform an API mashup process and an API mashup recommendation process, the API mashup process generating combinations of APIs that include one or more APIs from the plurality of FMS APIs, other avionics APIs, and/or third party APIs; and hosting a service mesh to process a user request from a user device for the API mashup recommendation process or an invoke micro-service process.

A non-transitory computer-readable medium may store instructions that, when executed by a processor, cause the processor to perform a method. The method may include: hosting a plurality of certified FMS micro-services associated with a plurality of FMS APIs; hosting an API mashup generator to perform an API mashup process and an API mashup recommendation process, the API mashup process generating combinations of APIs that include one or more APIs from the plurality of FMS APIs, other avionics APIs, and/or third party APIs; and hosting a service mesh to process a user request from a user device for the API mashup recommendation process or an invoke micro-service process.

Additional objects and advantages of the disclosed embodiments will be set forth in part in the description that follows, and in part will be apparent from the description, or may be learned by practice of the disclosed embodiments.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an overview of an example environment in which systems, methods, and other aspects of the present disclosure may be implemented.
FIG. 2 depicts a block diagram schematically showing a connected FMS cloud services platform, according to one or more embodiments.
FIG. 3 depicts a dataflow diagram of a connected FMS cloud services platform, according to one or more embodiments.
FIG. 4 depicts a block diagram schematically showing a connected FMS cloud services platform, according to one or more embodiments.
FIG. 5 depicts a flowchart of an exemplary method for generating API mashups, according to one or more embodiments.
FIGs. 6-8 depict graphics illustrating techniques for generating API mashups, according to one or more embodiments.
FIG. 9 depicts an example system that may execute techniques presented herein.

### DETAILED DESCRIPTION OF EMBODIMENTS

Various embodiments of the present disclosure relate generally to systems and methods for generating and recommending API mashups.

In general, the present disclosure is directed to systems and methods for generating and recommending API mashups. As discussed in more detail below, one aspect of the disclosure may be a system to automatically generate API mashups for connected flight management systems (FMS) services, with or without third party APIs, so that certified (e.g., by Federal Aviation Administration) FMS programs can be easily discovered and used. For instance, the process to automatically generate API mashups may collect API information for a plurality of APIs; perform natural language processing (NLP) techniques to the API information to cluster APIs in a tree structure; and generate API mashups based on results of a similarity analysis to determine if APIs in different sub-clusters of the tree structure may be combined. In another aspect of the disclosure, a user may transmit a request to the system, and the system may determine if one or more of the generated API mashups are within a threshold similarity to an application requirement of the request. Therefore, the present disclosure may make service discovery of existing APIs easier by providing an API mashup to a user.

Moreover, in another aspect of the disclosure, a system of the present disclosure may manage access to and use of APIs of the system and/or third party APIs. For instance, in response to a request from a user of the system for a micro-service of a system API or a third party API (e.g., indicated as available from a API mashup recommended to the user, as discussed above), the system may act as a proxy to request and receive data to/from the micro-service of the system API or third party API. Therefore, the present disclosure may reduce time and/or effort of adopting an existing API.

While some aspects of the disclosure are directed to API mashups for a connected FMS system of an aircraft, with or without third party APIs, it should be appreciated that the present systems and methods are applicable to generating and recommending API mashups for other cloud aircraft systems or other vehicles. The other cloud aircraft systems may include synthetic vision systems (SVS), ground proximity warning systems (GPWS), radar systems, engine systems, wheel systems, brake systems, power systems, or auxiliary power systems. The other vehicles may include drones, automobiles, ships, or any other autonomous and/or Internet-connected vehicle. Moreover, it should be appreciated that the present systems and methods are applicable to generating and recommending API mashups in general.

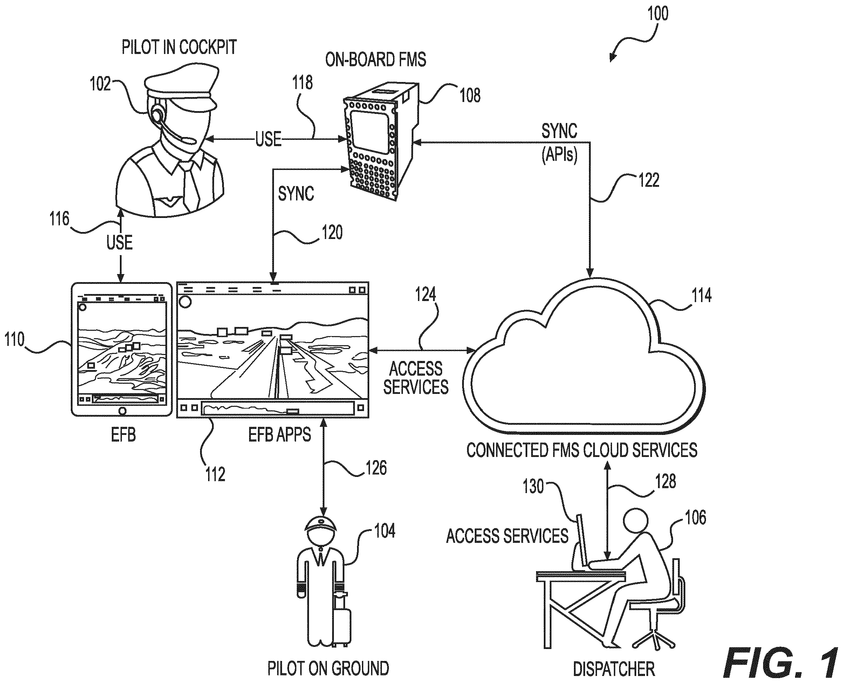

Referring now to the appended drawings, FIG. 1 shows an overview of an example environment 100, according to one or more embodiments of the present disclosure. The environment 100 may be an example of a situation in which one or more API mashup(s) may be requested by a user. The environment 100 may also be an example of a situation in which the user may invoke a micro-service of an API mashup (e.g., indicated by a recommended API mashup). The environment 100 may, for example, include an EFB (electronic flight bag) 110, an on-board FMS 108, a connected FMS cloud services platform 114, and/or a dispatcher device 130. One or more of the EFB 110, the on-board FMS 108, and/or the dispatcher device 130 may transmit one or more API mashup request(s) to the connected FMS cloud services platform 114. The connected FMS cloud services platform 114 may process the API mashup request(s), and transmit one or more recommendation message(s) to the EFB 110, the on-board FMS 108, and/or the dispatcher device 130. Therefore, a user of the EFB 110, the on-board FMS 108, and/or the dispatcher device 130 may be informed of available APIs. The user make a selection of a API mashup, and cause the EFB 110, the on-board FMS 108, and/or the dispatcher device 130 to transmit a request for a micro-service of the selected API mashup to the connected FMS cloud services platform 114.

The EFB 110 may be a computer device carried by a pilot or a flight crew. The EFB 100 may store, for example, navigational charts, maps for air and ground operations of an aircraft, a flight plan management system, an aircraft operating manual, flight-crew operating manual, software applications which automate flight-related or avionics-related computation tasks, and/or any application or data which may be installed in a general purpose computing platform. The on-board FMS 108 may be any specialized computer system physically installed in an aircraft (e.g., the cockpit). The on-board FMS 108 may be programmed and/or customized to service the flight crew of the aircraft with in-flight tasks. The dispatcher device 130 may be any computer device which may be accessed by a user who performs planning, flying, navigating, or managing tasks associated with aircrafts, airspaces, airports, or flight plans. Accordingly, the user is not limited to a dispatcher, and the dispatcher device 130 is not limited to a device of a dispatcher. The connected FMS cloud services platform 114 may be a cloud-based platform. The connected FMS cloud services platform 114 may provide FMS services (including responding to API mashup requests and processing of API requests) to any user who has authorized access to the platform, as described in further detail below.

As shown in FIG. 1, the environment 100 may accommodate access by various types of users. For example, a pilot in cockpit 102 may have access to the EFB 110, EFB applications 112 installed in an EFB 110, and/or the on-board FMS 108 for accessing the connected FMS cloud services platform 114. Because of the fundamental avionic functions continually provided by the on-board FMS 108 during a flight, a pilot in cockpit 102 may use on-board FMS 108 as the sole or primary avionic system for performing in-flight tasks and operations 118. Additionally, the pilot in cockpit 102 may also use the EFB 110 within the cockpit (e.g., on a tablet or any other portable computing device), as a back-up FMS access device and/or a supplemental avionic device. The EFB applications 112 may access the connected FMS cloud service platform 114, and provide the FMS services to the users of the EFB 110 in which the EFB applications 112 are installed. In that way, the EFB 110 may provide user-friendly and customized user interfaces, by which FMS services from the platform 114 may be serviced, for example, to the pilot in cockpit 102.

The on-board FMS 108 may also be configured to synchronize data 122 with connected FMS cloud services platform 114, using, for example, an application programming interface (API). In addition, the on-board FMS 108 may also be configured to synchronize data 120 with EFB applications 112. Thus, in some implementations, the on-board FMS 108 may be synchronized with data from both EFB 110 and the platform 114 in real-time or at predetermined intervals, in such a way that the pilot in cockpit 102 may rely on the on-board FMS 108 for all tasks arising in the environment 100.

A pilot on ground 104 may also access the EFB 110 and the EFB applications 112. In some implementations, the pilot on ground 104 and the pilot on cockpit 102 may be the same pilot, yet under different circumstances (e.g., time and location of the access). Additionally, or alternatively, the pilot on ground 104 may be a different pilot, or another authorized member of the flight crew, who accesses EFB 110 on the ground for an official duty related to the connected FMS cloud services 114. While the pilot on ground 104 is accessing the EFB applications 112 via EFB 110, the EFB applications 112 may access the connected FMS cloud service platform 114, and receive various FMS services from it. In that way, the EFB 110 may provide user-friendly and customized user interfaces, by which FMS services 126 from the connected FMS cloud service platform 114 may be serviced to the pilot on ground 104.

A dispatcher 106 may also access the connected FMS cloud services platform 114, through a dispatcher device 130. A dispatcher, in accordance with the present disclosure, may be any authorized personnel performing duties related to dispatching of aircrafts in the environment 100. For example, a dispatcher may be an airline staff, an airport staff, air traffic control personnel, a ground control personnel, a member of a relevant aviation authority, or any other authorized person who may benefit from FMS services from the connected FMS cloud services platform 114 in performing his/her duties. A dispatcher device 130 may be any computing device capable of establishing a connection 128 to the cloud and interfacing with the connected FMS cloud services platform 114. While a dispatcher 106 is accessing the FMS services via the dispatcher device 130, the dispatcher device 130 may access the connected FMS cloud service platform 114, and receive various FMS services from it. In that way, the dispatcher device 130 may provide user-friendly and customized user interfaces, by which FMS services 126 from the connected FMS cloud service platform 114 may be serviced to the dispatcher 106.

The on-board FMS 108, the EFB 110 and the dispatcher device 130 may include one or more devices capable of receiving, generating, storing, processing, and/or providing information associated with FMS services. For example, the on-board FMS 108, the EFB 110 or the dispatcher device 130 may include a communication and/or computing device, such as a mobile phone (e.g., a smart phone, a radiotelephone, etc.), a computer (e.g., a desktop computer, a laptop computer, a tablet computer, a handheld computer), a gaming device, a wearable communication device (e.g., a smart wristwatch, a pair of smart eyeglasses, etc.), or a similar type of device.

As indicated above, FIG. 1 is provided merely as an example. Other examples are possible and may differ from what was described with regard to FIG. 1. The number and arrangement of devices and networks shown in FIG. 1 are provided as an example. In practice, there may be additional devices, fewer devices and/or networks, different devices and/or networks, or differently arranged devices and/or networks than those shown in FIG. 1. Furthermore, two or more devices shown in FIG. 1 (e.g., EFB 110 and dispatcher device 130) may be implemented within a single device, or a single device shown in FIG. 1 (e.g., EFB 110, on-board FMS 108, or dispatcher device 130) may be implemented as multiple, distributed devices. Additionally, or alternatively, a set of devices (e.g., one or more devices) of environment 100 may perform one or more functions described as being performed by another set of devices of environment 100.

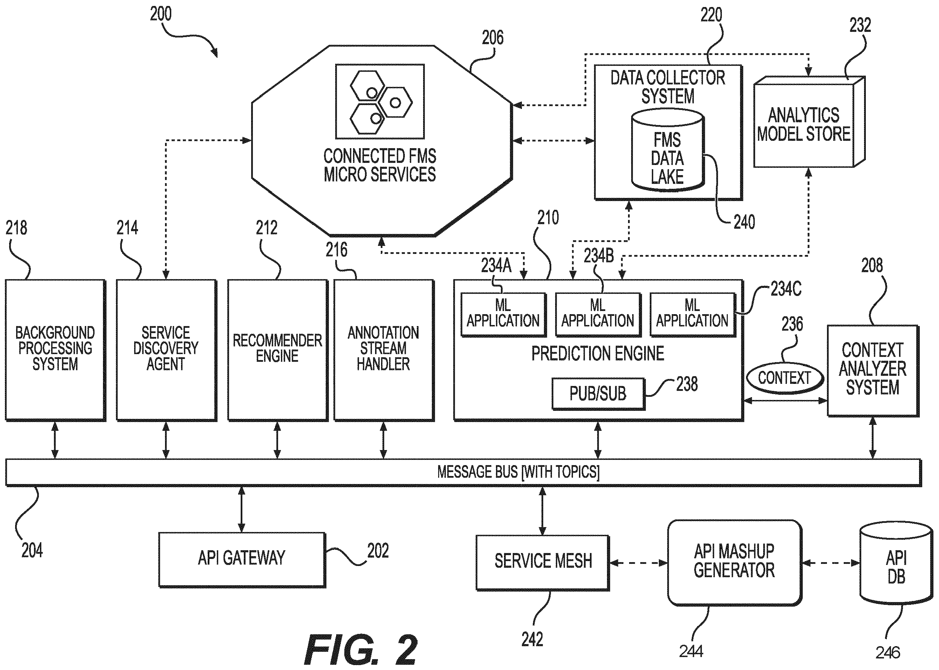

FIG. 2 depicts a block diagram schematically showing an example environment 200 in the connected FMS cloud services platform 114, according to one or more embodiments. The environment 200 (e.g., the connected FMS cloud services platform 114) may receive from one or more of the EFB 110, the on-board FMS 108, and/or the dispatcher device 130 a transmitted one or more API mashup request(s). The environment 200 (e.g., the connected FMS cloud services platform 114) may process the API mashup request(s), and transmit one or more recommendation message(s) to the EFB 110, the on-board FMS 108, and/or the dispatcher device 130. Therefore, a user of the EFB 110, the on-board FMS 108, and/or the dispatcher device 130 may be informed of available APIs. The user make a selection of a API mashup, and cause the EFB 110, the on-board FMS 108, and/or the dispatcher device 130 to transmit a request for a micro-service of the selected API mashup to environment 200 (e.g., the connected FMS cloud services platform 114). The environment 200 (e.g., the connected FMS cloud services platform 114) may, in response to the request for a micro-service, process the request, and transmit a response based on the processing of the request.

As shown in FIG. 2, the environment 200 may include an API (application programming interface) gateway 202, a message bus 204, servicing modules 208-220, connected FMS micro-services 206, a service mesh 242, an API mashup generator 244, and/or an API database (DB) 246. In some implementations, the environment 200 may correspond to the connected FMS cloud services platform 114, with the API gateway 202 allowing the communications 122, 124, and 128 depicted in FIG. 1. Components, devices, and modules of environment 200 may interconnect via wired connections, wireless connections, or a combination of wired and wireless connections.

The API gateway 202 may be a component which may serve as a point of entry for a group of micro-services, such as the connected FMS micro-services 206, the service mesh 242, and/or the API mashup generator 244. Depending upon various use cases, the API gateway 202 may be configured to accommodate requests or communications (e.g., requests from on-board FMS 108, EFB applications 112, or dispatcher device 130), invoke multiple back-end services (e.g., services by connected FMS micro-services 206) and aggregate and/or coordinate the results. The API gateway 202 may be in communication with the message bus 204, in order to communicate with the various back-end services. In addition, the API gateway 202 may be, for example, configured to be updated each time a new micro-service is added or removed in the connected FMS micro-services 206. The API gateway 202 may be implemented as hardware, software, and/or a combination of hardware and software.

The message bus 204 may be a connecting middleware between servicing modules 202-220, which enable the servicing modules 202-220 to interconnect and communicate amongst each other using messaging. The message bus 204 may include a messaging infrastructure, where each servicing module, for example, may provide data and allow other servicing modules to use them according to the modules' specific use cases. The message bus 204 may support, for example, single request/reply communications, group request/reply communications, and broadcast functions. In some implementations, servicing modules may provide data onto the message bus without mandating how the data are to be used, thereby resulting in free flow of data which allows various servicing modules to non-destructively consume and/or utilize those messages. The API gateway 202 may be implemented as hardware, software, and/or a combination of hardware and software.

The connected FMS micro-services 206 may be FMS services organized as a collection of specialized modular services. In some implementations, the connected FMS micro-services 206 may be software applications stored, at least in part, in one or more servers remote from on-board FMS 108, EFB 110, and dispatcher device 130, for cloud-based access from at least one of these devices. The connected FMS micro-services 206 may be modular services which are developed, deployed and scaled independently of each other, messaging-enabled to communicate with various components within the environment 200, and organized around capabilities. The connected FMS micro-services 206 may include, for example, flight planning services, in-flight navigation services, airport specific services, ground communication services, weather services, services for computing fuel scenarios, services for computing optimization scenarios, services for offsetting deviations, and services for computing approach procedures (collectively "FMS atomic services" of avionics atomic services 306). The connected FMS micro-services 206 may include one or more services that are certified by, e.g., the Federal Aviation Administration to perform FMS functions for aircraft. The connected FMS micro-services 206 may be implemented as hardware, software, and/or a combination of hardware and software.

The FMS atomic services may be accessed by one or more FMS cloud APIs. Specifically, the API gateway 202 may receive API requests from a user device, in accordance with the one or more FMS cloud APIs, and process the API request by routing the API request to a FMS atomic service. The FMS atomic service may processes the API request and transmits a response to the API gateway 202. The API gateway 202 may transmit the response to the user device.

A context analyzer system 208 may be a servicing module included in the environment 200. The context analyzer system 208 may receive one or more context analysis parameters, use the parameters to determine contexts, and provide one or more contexts to the message bus and/or the prediction engine 210. Subsequently, the one or more determined contexts may be used at any other component connected to the context analyzer system 208 in the environment 200. The one or more contexts may be, for example, a flight context, an airport context, or a weather context, and the contexts may be determined from communicating with a cockpit, a ground system, an airport database system, and/or connected weather services. By determining contexts, the accuracy and efficiency of services provided by the environment 200 may be enhanced by adding intelligence to the ways that the services deliver results. For example, determining pending flight information and airport status information as contextual data may enable the prediction engine 210 to more accurately and dynamically predict which flight plan requests would be received in the next few hours. The contextual data provided by the context analyzer system 208 may be used for various use cases in the environment 200, as described in further detail below. The context analyzer system 208 may be implemented as hardware, software, and/or a combination of hardware and software.

A prediction engine 210 may be another servicing module included in the environment 200. The prediction engine may be in connection with the message bus, as well as with the connected FMS micro-services 206, FMS data lake 240, analytics model store 232, and/or the context analyzer system 208. The prediction engine 210 may predict FMS services which are required for specific contexts, or predict data which may be necessary for an FMS service(s) or an operation of another servicing module(s). Predictions provided by the prediction engine 210 may be used for various use cases in the environment 200, as described in further detail below. The prediction engine 210 may be implemented as hardware, software, and/or a combination of hardware and software.

The prediction engine 210 may include machine learning applications 234A-234C. While three machine learning applications (234A, 234B, and 234C) are depicted by way of example, the prediction engine 210 may be configured to include any number of one or more machine learning applications based on predetermined preferences. In some implementations, output(s) from one or more of the included machine learning applications may become input(s) for different one or more of the machine learning applications to arrive at inference or prediction results. Additionally, one or more of the included machine learning applications may, for example, have streaming analytics capability along with down sampling of data. The prediction engine 210 may, for example, use the machine learning applications 234A-234C trained on a training set (e.g., FMS micro-services that have been called under certain contexts) in order to analyze the FMS micro-services being correlated with certain contexts, generate a score for contexts representing a similarity to a given context, and select one or more FMS micro-services associated with contexts over a threshold score. In some implementations, the prediction engine 210 may analyze prior predictions, to the extent obtainable from environment 200 and/or other environments, to train the machine learning applications 234A-234C (e.g., using one or more big data techniques) and determine predictions of FMS services which are required for specific contexts, or data predicted to be necessary.

An analytical model store 232 may be a repository that may store pre-built machine learning models, each with its respective model index. The repository may be, for example, a centralized, cloud-based data repository. A model index may include, for example, information related to the purpose of the model, training data set, and the accuracy of the machine learning model. The prediction engine 210 may utilize one or more models from the analytical model store 232 based upon runtime needs. In addition, the prediction engine may include PUB/SUB component 238, which may be publisher/subscriber component that may operate on the message bus 204. In some implementations, the prediction engine 210 may use PUB/SUB 238 component to receive notifications from the message bus 204 by subscribing to certain event topics, and/or publish messages onto the message bus 204 to notify other peer applications.

A recommender engine 212 may be another servicing module included in the environment 200. The recommender engine 212 may be configured to determine one or more recommendations associated with the one or more FMS services, based on one or more recommendation requests, the one or more contexts, and/or the prediction data. The recommendation requests may be received from on-board FMS 108, EFB applications 112, or dispatcher device 130. Additionally, or alternatively, the recommendation requests may be received from any other servicing modules in the environment 200 or any of the connected micro-services 206. The determined recommendations may be, for example, different flight plans based on conditions relating to weather, traffic, and/or terrain, or one or more aircraft performance options (e.g., cost index calculations for an aircraft) based on one or more predicted scenarios (e.g., data predicted at the prediction engine 210). The recommender engine 212 may be implemented as hardware, software, and/or a combination of hardware and software.

A background processing system 218 may be a servicing module included in the environment 200. In some implementations, a service discovery agent 214 and annotation stream handler 216 may be modules controlled by the background processing system 218, and/or sub-modules included in the background processing system 218. For example, a service discovery agent 214 may identity the most appropriate available micro-service which may be dynamically required for the avionics application needs, and bind an application connection request to the identified micro-service. An annotation stream handler 216 may, for example, help the connected FMS cloud services modules 208-220 and the FMS micro-services 206 to refine the telemetry data from IoT (Internet of Things) cloud communication channel(s). In implementations where the service discovery agent 214 and the annotation stream handler 216 are included in the background processing system 218, the modules service discovery agent 214, annotation stream handler 216, and background processing system 218 may be collectively referred to as the background processing system 218. In some other implementations, the service discovery agent 214 and annotation stream handler 216 may be in communication with the background processing system 218, as separate modules in the environment 200. The service discovery agent 214 may discover one or more service(s) (e.g., FMS micro-services) to identify, for example, the discovered one or more service(s) as a scheduled service(s) that the background processing system 218 to prepare background support data for. The annotation stream handler 216 may, for example, create and manage annotations of data streams which are received and/or produced by the background processing system 218. For example, to coordinate delivery of large volume of data (e.g., background support data being delivered to data collector system 220), the annotation stream handler 216 may provide semantic annotation of streaming data to support dynamic integration of the prepared data into the predicted FMS micro-service(s).

The background processing system 218 may be configured to identify one or more background operations to support an operation of a first FMS service, and generate background support data for the first FMS service using the one or more background operations. The first FMS service may be, for example, a FMS micro-service, among the connected FMS micro-services 206, which is predicted by the prediction engine 210 as the FMS micro-service that may be required to run at a certain time based on a given context. As another example, the first FMS service may be a set of one or more micro-services, which may be scheduled to run in a particular time frame in the future. Once the first FMS service is identified, the background processing system 218 may identify one or more background operations to generate support data for the first FMS service. The background operations may be one or more FMS micro-services from the connected FMS micro-services 206, one or more software services from a source other than the connected FMS micro-services 206, or a combination thereof. The background processing system 218 may execute the background operations to prepare data for the first FMS service. Such background operations may be selected and executed under various use cases in the environment 200, as described in further detail below. The background processing system 218 may be implemented as hardware, software, and/or a combination of hardware and software.

A data collector system 220 may be a servicing module included in the environment 200. In some implementations, a data collector system 220 may include and/or control databases such as FMS data lake 240, as shown in FIG. 2. In some other implementations, a data collector system 220 may include and/or control one or more databases, without including and/or controlling the FMS data lake 240. In implementations where FMS data lake 240 is not included in the data collector system 220, the FMS data lake may be a separate database which is in communication with at least one of the message bus 204, a module among service modules 208-220, and the connected FMS micro-services 206.

The data collector system 220 may receive or generate data associated with one or more of the servicing modules (e.g., the context analyzer system 208, the recommender engine 212, the prediction engine 210, the background processing system 218, and the data collector system 220). The data collector system 220 may also store the usable data in a data repository (e.g., FMS data lake 240 or another database) for later use or retrieval by at least one of the servicing modules. In some implementations, the data collector system 220 may provide data repository (e.g., FMS data lake 240 or another database) where all raw data in their native format until the data are needed. In this way, the data may be stored in a flat architecture, with each data element tagged with a set of metadata. The data collector system 220 may be used for various use cases in the environment 200, as described in further detail below. The data collector system 220 may be implemented as hardware, software, and/or a combination of hardware and software.

The service mesh 242 may be an infrastructure layer of the environment 200 for handling service-to-service communication from, e.g., the connected FMS cloud services platform 114 to other cloud services (not depicted) of an entity. The other cloud services may include a cloud-based synthetic vision system (SVS), a cloud-based ground proximity warning system (GPWS), a cloud-based radar system, a cloud-based engine system, a cloud-based wheel system, a cloud-based brake system, a cloud-based power system, and/or a cloud-based auxiliary power system (collectively, "cloud avionics services"). The service mesh 242 may receive messages from and transmit messages to the cloud avionics services for the connected FMS cloud services platform 114. The service mesh 242 may be implemented as hardware, software, and/or a combination of hardware and software.

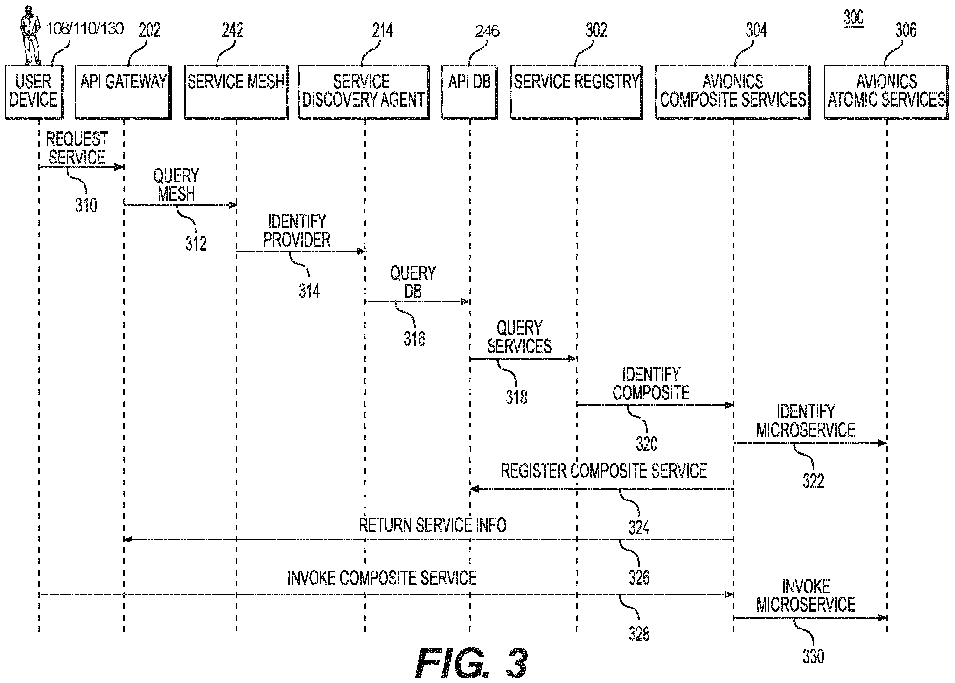

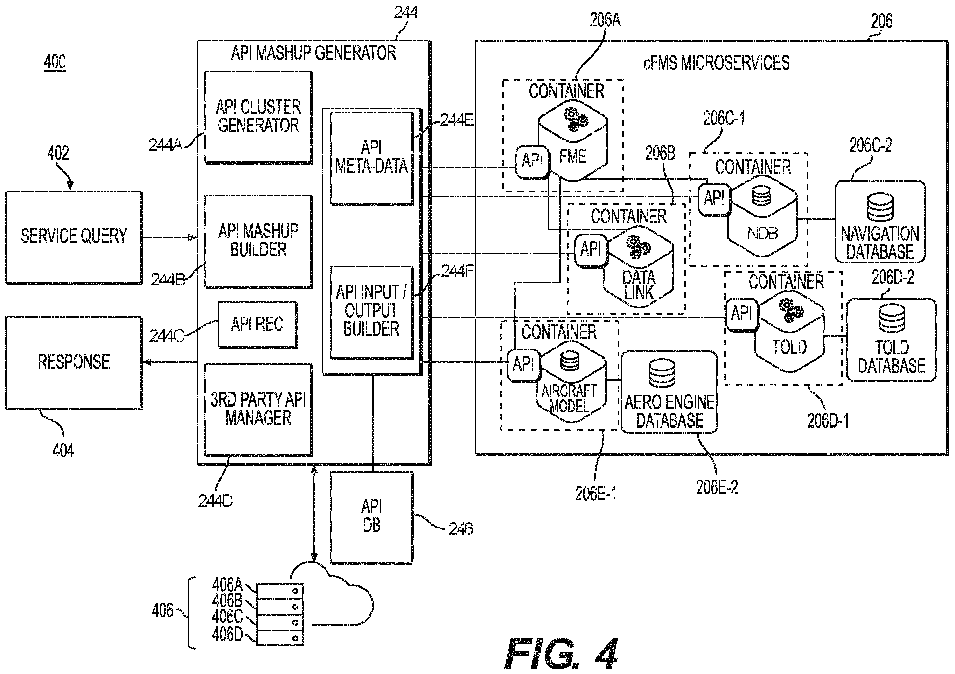

The service mesh 242 may also receive, via the API gateway 202, user request(s) for a recommendation process and/or an invoke micro-service process. The service mesh 242 may process the user request(s) for the invoke micro-service process and/or the recommendation process, as discussed in further detail below with respect to FIGS. 3 and 4, respectively. For instance, the service mesh 242 may receive a user request; determine whether the user request is for a recommendation process or an invoke micro-service process (e.g., based on an indicator in a header or message of the user request); if it is determined that the user request is for a recommendation process, forward the user request to the API mashup generator 244 (e.g., via the service discovery agent 214) and transmit a response message, if any, from the API mashup generator 244 to the user device; and if it is determined that the user request is for an invoke micro-service process, forward the user request to an appropriate cloud avionics service and/or the service discovery agent 214 of the connected FMS cloud services platform 114, and transmit a response message, if any, from the cloud avionics services and/or the connected FMS cloud services platform 114.

The API mashup generator 244 may perform an API mashup generation process and/or an API mashup recommendation process. The API mashup generator 244 may perform the API mashup generation process in response to a user request (e.g., a system administrator), every set period of time, or in response to an update to the API data (e.g., to update the generated API mashups). The API mashup generator 244 may perform the API mashup recommendation process in response to receiving a user request for a recommendation process from the service mesh 242. The API mashup generator 244 may be implemented as hardware, software, and/or a combination of hardware and software.

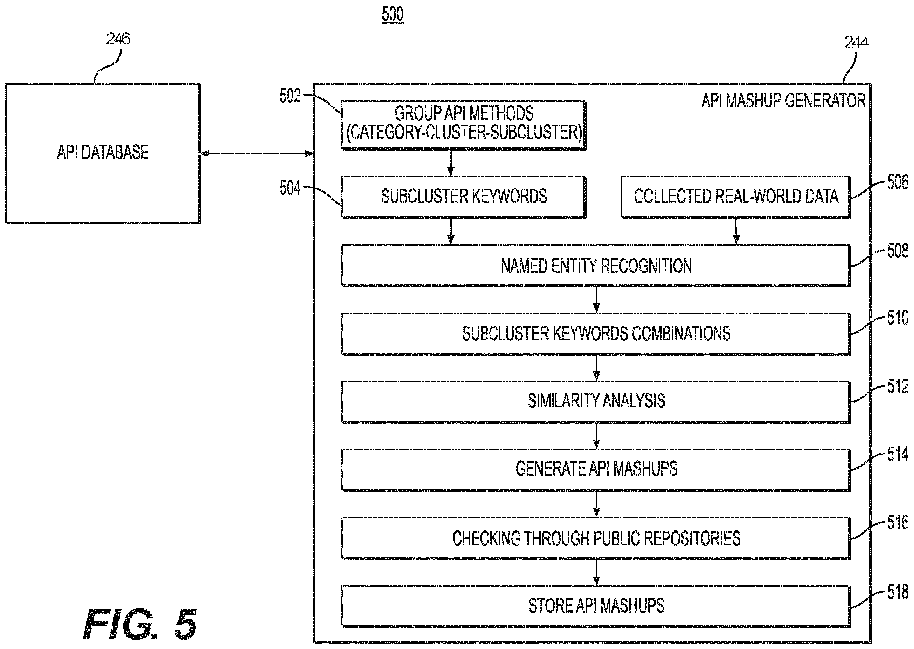

The API mashup generation process may generate one or more API mashups, as discussed below with respect to FIGS. 4 and 5. Generally, the API mashup generation process executed by the API mashup generator 244 may include: obtaining API data for a plurality of APIs; processing the API data for the plurality of APIs to form a tree structure; based on the tree structure, generating API mashups; and storing the generated API mashups with associated keywords in the API DB 246.

The API mashup recommendation process may transmit a list of one or more API mashups (e.g., generated according to the above process) to a user device, in response to a user request, as discussed below with respect to FIGS. 3 and 4. Generally, the API mashup recommendation process executed by the API mashup generator 244 may include: receiving a user request (e.g., a service query) from a user (e.g., via a user device and the service mesh 242), wherein the user request may include an application requirement; determining whether any keywords of the stored API mashups in the API DB 246 are within a threshold similarity to the application requirement; and in response to determining one or more keywords are within the threshold similarity, transmitting a recommendation message to the user (e.g., via the user device and the service mesh 242), wherein the recommendation message may include one or more API mashups that correspond to the one or more keywords.

The API DB 246 may store the API data and/or the generated one or more API mashups with the associated keywords. For instance the API data and/or the generated one or more API mashups with the associated keywords may be stored in a structured manner (e.g., a relational DB) or a non-structured manner (e.g., non-relational DB, such noSQL or newSQL).

The number and arrangement of modules, devices, and networks shown in FIG. 2 are provided as an example. In practice, there may be additional modules and devices, fewer modules, devices and/or networks, different modules, devices and/or networks, or differently arranged modules, devices and/or networks than those shown in FIG. 2. Furthermore, two or more devices included in environment 200 of FIG. 2 may be implemented within a single device, or a single device in the environment 200 of FIGS. 2 may be implemented as multiple, distributed devices. Additionally, or alternatively, a set of devices (e.g., one or more devices) of environment 200 may perform one or more functions described as being performed by another set of devices of environment 200. Each servicing module (e.g., the context analyzer system 208, the recommender engine 212, the prediction engine 210, the background processing system 218, and the data collector system 220) may perform its functions using one or more computer processors, and in some implementations, each servicing module may comprise the one or more computer processors as a component therein.

FIG. 3 depicts a dataflow diagram 300 of a connected FMS cloud services platform, according to one or more embodiments. Specifically, FIG. 3 may depict an invoke micro-service process between a user device (such as the on-board FMS 108, the EFB 110, or the dispatcher device 130 of FIG. 1) and the connected FMS cloud services platform 114. As depicted in FIG. 3, the connected FMS cloud services platform 114 may further include a service registry 302, an avionics composite services 304, an avionic atomic services 306.

The service registry 302, the avionics composite services 304, and the avionic atomic services 306 may be servicing modules included in the environment 200. Specifically, the service registry 302 may include a list of APIs with associated endpoints for each of the APIs included in the list of APIs. The list of APIs may include APIs offered by the entity, such as the FMS cloud APIs of the connected FMS cloud services platform 114 and cloud atomic APIs of cloud avionics services (discussed below), and third party APIs.

The avionics composite services 304 may be a list of available micro-services for each of the APIs included in the list of APIs of the service registry 302 associated with endpoints. For instance, the avionics composite services 304 may include a list of the micro-services provided by the connected FMS micro-services 206 and a list cloud micro-services provided by the cloud avionics services.

The avionics atomic services 306 may be a list of available atomic services for each of the micro-services listed in the avionics composite services 304 associated with micro-services. For instance, the avionics atomic services 306 may include a list of the FMS atomic services and a list of cloud atomic services of micro-services provided by the cloud avionics services.

Like the one or more FMS cloud APIs accessed via the API gateway 202 discussed above, the cloud atomic services may be accessed by the cloud atomic APIs. Specifically, a user may transmit cloud atomic API requests to their respective API gateways (not depicted), or indirectly to the service mesh 242 that may forward the cloud atomic API requests to the respective API gateways. The respective API gateways may receive cloud atomic API requests, in accordance with the cloud atomic APIs, and process the cloud atomic API requests by routing the cloud atomic API request to an atomic service of the cloud avionics services. The atomic service may process the cloud atomic API request and transmit a response to the respective API gateway. The respective API gateway may transmit the response to the user device directly or indirectly via the service mesh 242.

Referring now to the dataflow diagram 300, the data flow diagram may depict the invoke micro-service process between the user device (such as the on-board FMS 108, the EFB 110, or the dispatcher device 130 of FIG. 1) and the connected FMS cloud services platform 114. Specifically, the invoke micro-service process may first start by the user device transmitting a request for service message (step 310) to the API gateway 202. The API gateway 202 may receive the request for service message, and determine that the request for service message is requesting an invoke micro-service process. Specifically, the API gateway 202 may extract a request for an invoke micro-service process from the request for service message, in accordance with the FMS cloud APIs. For instance, the request for service message may include data structure that indicates the request for the invoke micro-service process, and an identifier of an API or of an API mashup.

The API gateway 202 may then transmit a query mesh message to the service mesh 242 (step 312) based on the determination that the request for service message is requesting the invoke micro-service process. The query mesh message may include the request for the invoke micro-service process and/or the request for service message. The service mesh 242 may receive the query mesh message, and determine that query mesh message is requesting the invoke micro-service process for a service of the entity (e.g., by extracting the request as discussed above). The service mesh 242 may determine whether the service being requested is associated with the connected FMS cloud services platform 114 (e.g., a FMS atomic service) or a service associated with the cloud avionics services, e.g., based on the identifier of the API or of the API mashup. If the service being requested is associated with a service associated with the cloud avionics services, the service mesh 242 may transmit the query mesh message to the appropriate cloud avionics service of the cloud avionics services.

If the service being requested is associated with the connected FMS cloud services platform 114, the service mesh 242 may then transmit an identify provider message to the service discovery agent 214 (step 314). The identify provider message may include the identifier of the API or of the API mashup. The service discovery agent 214 may receive the identify provider message, extract the identifier of the API or of the API mashup, and query the API DB 246 using the identifier of the API or of the API mashup to determine a corresponding API or corresponding list of APIs for the API mashup.

In one aspect of the disclosure, the service discovery agent 214 may perform steps 318 through 326. In another aspect of the disclosure, the service discovery agent 214 may transmit the corresponding API or corresponding list of APIs to the service mesh 242, and the service mesh 242 may perform steps 318 through 326.

In step 318, using the corresponding API or corresponding list of APIs, the service discovery agent 214 or the service mesh 242 may query the service registry 302 to determine one or more endpoints for the corresponding API or corresponding list of APIs. For instance, the service discovery agent 214 or the service mesh 242 may filter the list of APIs in the service registry 302 to find matching APIs to the corresponding API or corresponding list of APIs, and extract corresponding endpoints.

In step 320, using the one or more extracted endpoints, the service discovery agent 214 or the service mesh 242 may query the avionics composite services 304 to identify a composite service corresponding to the one or more endpoints. For instance, the service discovery agent 214 or the service mesh 242 may filter the list of micro-services in the avionics composite services 304 to find matching micro-services to the extracted endpoints.

In step 322, using the matching micro-services, the service discovery agent 214 or the service mesh 242 may query the avionics atomic services 306 to identify one or more atomic services for the matching micro-services. For instance, the service discovery agent 214 or the service mesh 242 may filter the list of available atomic services in the avionics atomic services 306 to find matching atomic services to the matching micro-services.

In step 324, using the matching atomic services, the matching micro-services, and/or the one or more extracted endpoints, the service discovery agent 214 or the service mesh 242 may register a composite service in the API DB 246. To register a composite service in the API DB 246, the service discovery agent 214 or the service mesh 242 may store composite service information in the API DB 246. The composite service information may include information about one or more of: corresponding API or corresponding list of APIs for the API mashup, the matching atomic services, the matching micro-services, and/or the one or more extracted endpoints in association with the identifier of the API or of the API mashup. Therefore, in response to future requests to invoke the micro-service process for the identifier of the API or of the API mashup, the service discovery agent 214 or the service mesh 242 may access the information directly, without querying multiple datasets. The service discovery agent 214 or the service mesh 242 may, in response to registering the composite service, generate a service information message. The service information message may indicate whether the registration process was successful or not successful and, if successful, an indication of how to invoke the composite service (e.g., by using the identifier of the API or of the API mashup or a unique identifier of the composite service).

In step 326, if the service information message indicates the registration process was successful, the service discovery agent 214 or the service mesh 242 may transmit the service information message to the API gateway 202. The API gateway 202 may transmit a confirmation message based on the service information message to the user device. The confirmation message may include an indication to confirm the request for the invoke micro-service process has successfully been completed, and an indication of how to invoke the composite service.

The user device may receive the confirmation message from the API gateway 202. The user device may transmit an invoke composite service message to the API gateway 202, which may transmit the invoke composite service message to the service mesh 242. In step 328, the service mesh 242 may invoke a composite service based on the invoke composite service message. For instance the service mesh 242 may transmit instructions to micro-services of the avionics composite services 304 (e.g., of the connected FMS cloud services platform 114 or the cloud avionics services), as indicated in the invoke composite service message. In step 330, the instructed micro-services may transmit instructions to invoke specific atomic services of the list of available atomic services of the avionics atomic services 306 (e.g., of the instructed micro-services), as indicated in the invoke composite service message. The invoked atomic services may perform processing, in accordance with the invoke composite service message and their respective programs, and transmit response messages to their respective API gateway (or via service mesh 242) to be transmitted back to the user device.

FIG. 4 depicts a block diagram 400 schematically showing a connected FMS cloud services platform, according to one or more embodiments. In the block diagram 400, the connected FMS cloud services platform 114 may include the API mashup generator 244, the connected FMS micro-services 206, and/or the API DB 246. The API mashup generator 244 may perform the API mashup generation process and/or the API mashup recommendation process, as discussed in more detail below.

The connected FMS micro-services 206 may include one or more containers with one or more databases, such as a flight management engine (FME) container 206A, a data link container 206B, a navigation database (NDB) manager container 206C-1 with associated navigation DB 206C-2, a takeoff and landing data (TOLD) engine container 206D-1 with associated TOLD DB 206D-2, and/or aircraft model container 206E-1 and aero-engine DB 206E-2. Containers may include a specific software application programs, configurations, and dependencies. The containers may be hosted on a same or different virtual machine, with the virtual machine(s) being hosted on one or more servers of the connected FMS cloud services platform 114. The software application programs of the containers may be set (by the connected FMS cloud services platform 114) based on a processing load/number of requests for a type of API request to the connected FMS cloud services platform 114. For instance, a number of containers that are executing a certain software application program may be proportional to the processing load/number of requests for a certain type of API request. Moreover, each container may have an API access point that invokes a micro-service of the container, in accordance with the one or more FMS cloud APIs.

The FME container 206A may execute software application programs for the flight planning services and/or the in-flight navigation services of the FMS atomic services. The FME container 206A may include certified (e.g., by Federal Aviation Administration) FMS programs. The data link container 206B may execute software application programs for the communication services of the FMS atomic services. The NDB manager container 206C-1 may execute software application programs for navigation services for routing, terrain and obstacle avoidance, and/or restricted airspace avoidance, based on navigation data in the navigation DB 206C-2. The TOLD engine container 206D-1 may execute software application programs for generating departure or arrival procedures/sequences, based on runway and waypoint information in the TOLD DB 206D-2. The aircraft model container 206E-1 may execute software application programs for generating aircraft specific capabilities, based on performance information in the aero-engine DB 206E-2.

The API mashup generator 244 may include a API cluster generator 244A, an API mashup builder 244B, an API recommender (REC) 244C, a third party API manager 244D, an API meta-data collector 244E, and/or an API input/output builder 244F.

The API meta-data collector 244E, the API input/output builder 244F, and the third party API manager 244D may collect and/or generate API data. The API DB 246 may store the collected and/or generated API data.

The API meta-data collector 244E may collect meta-data, descriptions of API functionality, etc. for third party APIs 406, including one or more third party APIs 406A-406D (e.g. via the third party API manager 244D); the cloud atomic APIs; and/or the one or more FMS cloud APIs (collectively "a plurality of APIs"). For instance, the API meta-data collector 244E may collect, for each API of the plurality of APIs, category descriptions, primary category fields, secondary category fields, descriptions, documentation, schema information, etc., by one or combinations of: (1) web crawling and scraping information from webpages of, e.g., API repositories or third party API descriptions; (2) requesting information from individual APIs about the individual APIs through an API call request; and/or (3) accessing API data for the cloud atomic APIs and/or the one or more FMS cloud APIs stored on the connected FMS cloud services platform 114 or the cloud avionics services.

For some of the third party APIs 406, the API meta-data collector 244E may also collect mapping data and functionality data for specific types of API repositories, such as existing avionics API repositories, mapping API repositories, weather API repositories, navigation API repositories, etc. The API meta-data collector 244E may store the mapping data and the functionality data. The mapping data and the functionality data for the specific types of API repositories may be included in a plurality of example API datasets. The mapping data may be configuration/arrangement information for an API repository, such as types of resources exposed by the API repository, an index of endpoints for the resources exposed by the API repository, and/or relationships between the resources. The functionality data may be a description of data or functions provided by the resources exposed by the API repository.

The API input/output builder 244F may analyze the APIs of the plurality of APIs to generate meta-data about request inputs and response outputs for each of the plurality of APIs. The API input/output builder 244F may store the generated meta-data in the API DB 246. The request inputs may be one or a combination of data structures, data types, and/or instruction indicators. The response outputs may be one or a combination of data structures, data types, and/or instruction indicators. For instance, the API input/output builder 244F may analyze the documentation and schemes for the APIs to determine required API request inputs, such as data structures, data types, and/or instruction indicators; and extract meta-data about the required API request inputs. The API input/output builder 244F may also determine, for each of the required API request inputs, one or more expected response outputs, such as data structures, data types, and/or instruction indicators.

The third party API manager 244D may collect the API data discussed above for the third party APIs 406 for the API meta-data collector 244E. The third party API manager 244D may also periodically re-collect the API data to determine if new third party APIs are available and/or if the third party APIs 406 have been updated, and provide the additional third party APIs and/or updates to the API meta-data collector 244E.

As discussed above, the API mashup generator 244 may perform the API mashup generation process in response to a user request (e.g., a system administrator), every set period of time, or in response to an update to the API data (e.g., to update the generated API mashups). The API mashup generator 244 may perform the API mashup generation process in three stages. The API cluster generator 244A may perform a first stage to generate a tree structure. The API mashup builder 244B may perform a second stage to generate API mashups and perform a third stage to rank the generated API mashups.

The API cluster generator 244A may obtain the API data for the plurality of APIs from the API DB 246. The API cluster generator 244A may then process the API data for the plurality of APIs to form a tree structure. The tree structure may be based on a text analysis of each of the plurality of APIs to group APIs into sub-clusters of the tree structure. The sub-clusters may be branched below clusters of the tree structure. The clusters may be branched below categories of the tree structure.

The API cluster generator 244A may generate the categories of the tree structure based on a frequency of keywords in the API data associated with the plurality of APIs. Keywords may be nouns, verbs, and/or adverbs of the category descriptions, the primary category fields, the secondary category fields, the descriptions, the documentation, and/or the schema information in the API data. For instance, the API cluster generator 244A may compute the frequency of every keyword in both the category descriptions and the primary category fields of APIs; compute a number of related APIs for each keyword in the category descriptions, for example a diversion API may be related to a Flight Plan API and they will have a very high similarity score; measure a similarity among different keywords of the keywords in the category descriptions by using, e.g., vector mapping and/or other natural language understanding techniques; generate the categories by selecting category keywords based on frequency of every keyword, the number of related APIs, and the measured similarity among the different keywords; group APIs that have category keywords into corresponding categories, by using clustering and sub -clustering methods such as Data Clustering, K-Means Clustering, Fuzzy C-Means Clustering, Mountain Clustering Method, and/or Subtractive Clustering.

The API cluster generator 244A may generate the clusters for each of the categories based on the frequency of keywords in the API data associated with the plurality of APIs. For instance, the API cluster generator 244A may compute a frequency of every keyword in APIs secondary category field for each API in a category; compute a number of related APIs for each keyword in the secondary category field for each API in the category; measure a similarity among different keywords of the keywords in the secondary category field for each API in the category with respect to the keywords of the category descriptions; select a predetermined number of keywords as cluster keywords for clusters for the category; and group APIs that have cluster keywords into corresponding clusters. The selected predetermined number of keywords may be selected according to a ranking of keywords (e.g., of similarity scores) for the secondary category field, and the keywords that are first through the predetermined number may be selected.

The API cluster generator 244A may generate the sub-clusters for each of the clusters based on a frequency of keywords in the API data associated with the plurality of APIs. Specifically, the API cluster generator 244A may, for each cluster of each category, group APIs of a cluster into different sub-clusters based on the descriptions of the APIs of the cluster. For instance, the API cluster generator 244A may remove stop words and symbols in the descriptions of the APIs of the cluster; chop descriptions into keywords of the descriptions of the APIs of the cluster; measure every keyword type of the keywords of the descriptions; generate, as refined keywords for the description, word stems for every noun keyword of the keywords the descriptions of the APIs of the cluster; compute a frequency for every word stem/refined keyword; compute a number of related APIs for the APIs in the cluster; measure a similarity among different refined keywords of the refined keywords with respect to the keywords of the cluster; select a predetermined number of refined keywords as sub-cluster keywords for clusters for the cluster; and group APIs that have sub-cluster keywords into corresponding sub-clusters. The selected predetermined number of keywords may be selected according to a ranking of refined keywords (e.g., of similarity scores), and the refined keywords that are first through the predetermined number may be selected. The predetermined number for the sub-clusters may be the same or different from the predetermined number for the clusters.

In one aspect of the disclosure, APIs may only be grouped in one sub-cluster of one cluster based on a highest similar score. In another aspect of the disclosure, APIs may be grouped in one or more sub-clusters of one or more clusters.

The API cluster generator 244A may perform the first stage to generate the tree structure, as discussed above, and the API cluster generator 244A may store the tree structure in the API DB 246 and/or send a message to the API mashup builder 244B indicating that the first stage is complete and/or the sub-cluster keywords.

The API mashup builder 244B may perform the second stage to generate API mashups after the tree structure is stored in the API DB 246 or in response to receiving the message indicating that the first stage is complete. The API mashup builder 244B may obtain one or more of the plurality of example API datasets from the API DB 246. For instance, the API mashup builder 244B may obtain example API datasets that correspond to the categories of the tree structure, either by retrieving example API datasets from the API DB 246 or by instructing the API meta-data collector 244E to obtain example API datasets, if there are no example API datasets corresponding to a category stored in the API DB 246.

The API mashup builder 244B may generate sub-cluster keyword combinations based on the plurality of example API datasets and the sub-cluster keywords for the sub-clusters of the tree structure. In one aspect of the disclosure, a sub-cluster keyword combination may include one or more sub-cluster keywords of a category. In another aspect of the disclosure, the sub-cluster keyword combination may include one or more sub-cluster keywords of a cluster.

In one aspect of the disclosure, the API mashup builder 244B may generate the sub-cluster keyword combinations by: generating combinations of every possible combination of sub-cluster keywords of the category/cluster; and filtering the combinations based on the mapping data and functionality data of the plurality of example API datasets to obtain the sub-cluster keyword combinations. For instance, the filtering based on the mapping data and functionality data may identify combinations that match the configuration/arrangement information of the mapping data and/or match the data or functions provided by the different resources of the functionality data.

In another aspect of the disclosure, the API mashup builder 244B may generate the sub-cluster keyword combinations by: collecting historical user requests; generating sub-cluster keywords combinations for every historical user requests by using a knowledge-based system. The historical user requests may be obtained based on end users requesting specific data and/or functionality. For instance, cloud logs of cloud service instrumentations of the connected FMS cloud services platform 114 along with API Gateway logs of the API gateway 202 may be used to generate usage reports, and the historical user requests may be extracted from the usage reports. The knowledge-based system may generate sub-cluster keywords combinations based on a content of the historical user requests and the sub-cluster keywords of the category/cluster. For example, the knowledge-based system may match the content to individual sub-cluster keywords of the category/cluster, and group the matched sub-cluster keywords as the sub-cluster keywords combinations. The knowledge-based system may contain pre-defined named entities to create specific types of sub-cluster keywords combinations, such as for FMS API mashups, radar API mashups, etc. For example, the pre-defined named entities may include terms entered by a user of the API mashup generator 244 (e.g., an end user or an administrator of the connected FMS cloud services platform 114), such as "trajectory," "navigation," "performance," etc., or aliases thereof.

In another aspect of the disclosure, the API mashup builder 244B may generate the sub-cluster keyword combinations by: collecting historical user requests; training a supervised machine learning model on feature vectors that include the historical user requests and the plurality of example API datasets, to target keyword combinations; generate the sub-cluster keyword combinations by applying the trained supervised machine learning model to a new feature vector that includes information from the tree structure. The supervised machine learning model may identify correlations and mapping between the historical user requests and the plurality of example API datasets, and apply the correlations and mapping to the new feature vector.

The API mashup builder 244B may generate API mashups, for each sub-cluster keyword combination of each category, by combining APIs from different sub-clusters when a similarity analysis indicates the APIs from the different sub-clusters can be combined. For instance, the API mashup builder 244B may obtain the generated sub-cluster keyword combinations; for each sub-cluster keyword of a sub-cluster keyword combination, obtain a list of sub-cluster APIs from the tree structure that are associated with the sub-cluster keyword; select an API from each list of sub-cluster APIs for different sub-cluster keywords of the sub-cluster keyword combination; perform a similarity analysis on the selected APIs to determine a similarity score, to check if the selected APIs can be combined; and if a similarity score for the selected APIs of sub-cluster keyword combination is above a threshold value, group the selected APIs into an API mashup.

To select an API from each list of sub-cluster APIs for different sub-cluster keywords of the sub-cluster keyword combination, the API mashup builder 244B may first select APIs from the list of sub-cluster APIs that are the FMS cloud APIs or the cloud atomic APIs; and if there are no FMS cloud APIs or cloud atomic APIs in the list of sub-cluster APIs, select an API at random from the list of sub-cluster APIs.

In one aspect of the disclosure, the similarity analysis performed by the API mashup builder 244B may determine a similarity score for the selected APIs by comparing the selecting APIs to the mapping data and the functionality data of the plurality of example API datasets. The similarity score may indicate a correlation of the selected APIs and the mapping data and the functionality data. For instance, while clustering the API Categories, a mean average distance between each data pointers across the groups may determine the similarity scores. A high correlation may indicate the selected APIs have similar types of resources exposed as the API repository, a similar indexes of endpoints for the resources exposed by the API repository, a similar relationships between the resources, and/or a similar description of data or functions provided by the resources.

In another aspect of the disclosure, the similarity analysis performed by the API mashup builder 244B may determine a similarity score for the selected APIs by comparing the selecting APIs to each other. In this case, the similarity score may indicate a correlation of similar types of resources, similar indexes of endpoints, similar relationships between the resources, and/or a similar description of data or functions provided by the resources of the selected APIs.

In this manner, the API mashup builder 244B may generate a plurality of API mashups based on the tree structure, for each sub-cluster keyword combination of each category. The API mashup builder 244B may store the generated plurality of API mashups in the API DB 246 in association with (1) the respective sub-cluster keywords of the sub-cluster keyword combination, (2) the respective cluster, (3) the respective category, (4) the similarity score of the API mashup, (5) a ranking and/or quantitative indicator, discussed below, and/or (6) an identifier (collectively "API mashup data").

Optionally, the API mashup builder 244B may perform the third stage to rank the generated API mashups. The API mashup builder 244B may perform the third stage to rank the generated API mashups after the API mashups are stored in the API DB 246 or immediately after the second stage without storing the API mashups in the API DB 246.

In one aspect of the disclosure, the API mashup builder 244B may determine whether two or more API mashups associated with a same category/same cluster have similarity scores within a threshold range of each other. For instance, the API mashup builder 244B may compare the similarity scores for the mashup APIs of the same category/same cluster, and determine whether the similarity scores are within the threshold range of each other. In response to determining two or more API mashups are within the threshold range of each other, the API mashup builder 244B may rank the two or more API mashups based on priority factors. The priority factors may include: whether APIs of an API mashup are included in a public repository (e.g., API Harmony); whether APIs of an API mashup are included in a private repository (e.g., of a for-profit or non-profit entity); whether APIs of an API mashup are related to specific function(s) (e.g., Notice to Airman "NOTAM" identification). The specific function(s) may be entered by an end user (e.g., in a request for an API mashup) or an administrator of the connected FMS cloud services platform 114. The API mashup builder 244B may rank the two or more API mashups according to a number of priority factors for the respective API mashups. The number of priority factors for the respective API mashups may be based on how many APIs of the API mashup are included in the public repository, the private repository, or are related to the specific functions. The API mashup builder 244B may store the rankings of the two or more API mashups in the API DB 246 in associated with the two or more API mashups.

In another aspect of the disclosure, the API mashup builder 244B may, alternatively or additionally, combine the similarity score and the ranking, if any, of generated API mashups to generate a quantitative indicator. The quantitative indicator may indicate whether the API mashups are plausible. For instance, as the selected APIs of the similarity analysis are from different sub-clusters of a sub-cluster keyword combination and the sub-cluster keyword combination are obtained based on the plurality of example API datasets and/or the historical user requests, the similarity score for the sub-cluster keyword combination indicate that APIs are more likely to be combined as a plausible API mashup. As an example, as APIs have more similar features (e.g., trajectory information, inputs/outputs, etc.), the APIs may have a higher similarity score, and thus may be more likely to be combined as a plausible API mashup. The API mashup builder 244B may store the quantitative indicator of the API mashups in the API DB 246 in associated with the API mashups.

Moreover, the API mashup builder 244B may evaluate an overall accuracy of the API mashup generation process, by using the generated API mashups to train machine learning and/or deep learning models, and then use an independent mashup dataset collected from real-time projects for testing.

The API REC 244C of the API mashup generator 244 may perform the API mashup recommendation process in response to receiving a service query 402 for a recommendation process from the service mesh 242. The service query 402 may be based on a user request from a user device, and the service query 402 may include an application requirement. An application requirement may include text-strings indicating data types or functionality.

In response to receiving the service query 402, the API REC 244C may retrieve the API mashup data. The API REC 244C may generate a response 404 based on the API mashup data and the service query 402. For instance, the API REC 244C may extract sub-cluster keywords for the API mashups from the API mashup data; determine whether any of the sub-cluster keywords are within a threshold similarity to the application requirement; and, in response to determining one or more sub-cluster keywords are within the threshold similarity, transmit a response 404 to the user (e.g., via the service mesh 242). The response 404 may include a recommendation message. The recommendation message may include one or more API mashups that correspond to the one or more sub-cluster keywords that are within the threshold similarity to the application requirement.

To determine whether any of the sub-cluster keywords are within a threshold similarity to the application requirement, the API REC 244C may search the stored sub-cluster keywords for any matches (or near matches) to the text-strings indicating data types or functionality of the application requirement. The threshold similarity may determine that sub-cluster keywords must match the text-strings (or portions thereof) literally, based on word stems of the sub-cluster keywords and the text-strings, or based on the sub-cluster keywords and the text-strings being synonyms, etc.

To transmit a response 404 to the user, the API REC 244C may a response 404 by retrieving corresponding API mashups (or identifiers thereof) based on the matching sub-cluster keywords and sending the response 404. For instance, the API REC 244C may determine which API mashups have matching sub-cluster keywords, and retrieve the corresponding API mashups (or identifiers thereof). The API REC 244C may generate the recommendation message by: retrieving the ranking and/or quantitative indicator extracted from the API mashup data for the corresponding API mashups (or identifiers thereof); ranking the corresponding API mashups (or identifiers thereof) according to the ranking and/or quantitative indicator; formatting the ranking and the corresponding API mashups (or identifiers thereof) into the recommendation message; and transmitting the response 404 that includes the recommendation message.

Therefore, systems and methods of the present disclosure may make service discovery of APIs easier by providing API mashups in response to user requests for data types or functionality, as included in the application requirement. Moreover, systems and methods of the present disclosure may reduce time and/or effort of adopting an API by using the connected FMS cloud services platform 114. Specifically, the service mesh 242, as discussed above with respect to FIG. 3, may handle an invoke micro-service process on behalf of a user. Lastly, systems and methods of the present disclosure may make selecting appropriate entity APIs, with or without third party APIs, easier by providing API mashups that include entity APIs, as discussed above with respect to the API mashup builder 244B selecting APIs from the list of sub-cluster APIs that are the FMS cloud APIs or the cloud atomic APIs.

FIG. 5 depicts a flowchart 500 of an exemplary method for generating API mashups, according to one or more embodiments. In the flowchart 500, the method may be performed by the API mashup generator 244; specifically, the blocks 502 and 504 may performed by the API cluster generator 244A, and blocks 506 through 518 may be performed by the API mashup builder 244B.

In the flowchart 500, the method may start alternatively at block 502 or block 506 (or block 502 and block 506 may be performed at the same time). At block 502, the method may start by grouping API methods, such as performing the first stage to generate a tree structure discussed above. Then, the method may proceed to block 504 by storing the tree structure in the API DB 246 and/or transmitting a message to the API mashup builder 244B indicating that the first stage is complete and/or a message including the sub-cluster keywords.

At block 506, the method may obtain collected real-world data, such as the plurality of example API datasets and/or the historical user requests from the API DB 246. Optionally, the method may proceed to block 508 to obtain named entity recognition, as discussed above with respect to the knowledge-based system. Then, the method may proceed to block 510 to generate sub-cluster keyword combinations. Then, the method may proceed to block 512 to perform similarity analysis on the generated sub-cluster keyword combinations, as discussed above to obtain similarity scores for selected APIs. Then, the method may proceed to block 514 to generate API mashups, as discussed above by grouping the selected APIs into API mashups if the similarity scores for the selected APIs of sub-cluster keyword combinations are above a threshold value. Then, optionally, the method may proceed to block 516 to check through public repositories to determine a ranking and/or generate quantitative indicators, as discussed above. Then, the method may proceed to block 518 to store the API mashups in the API DB 246.

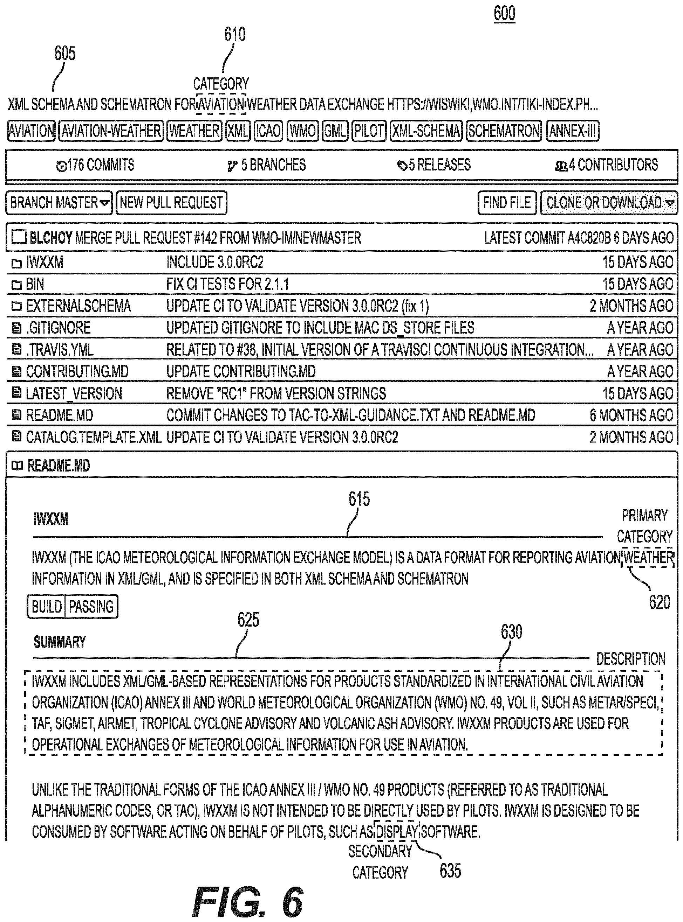

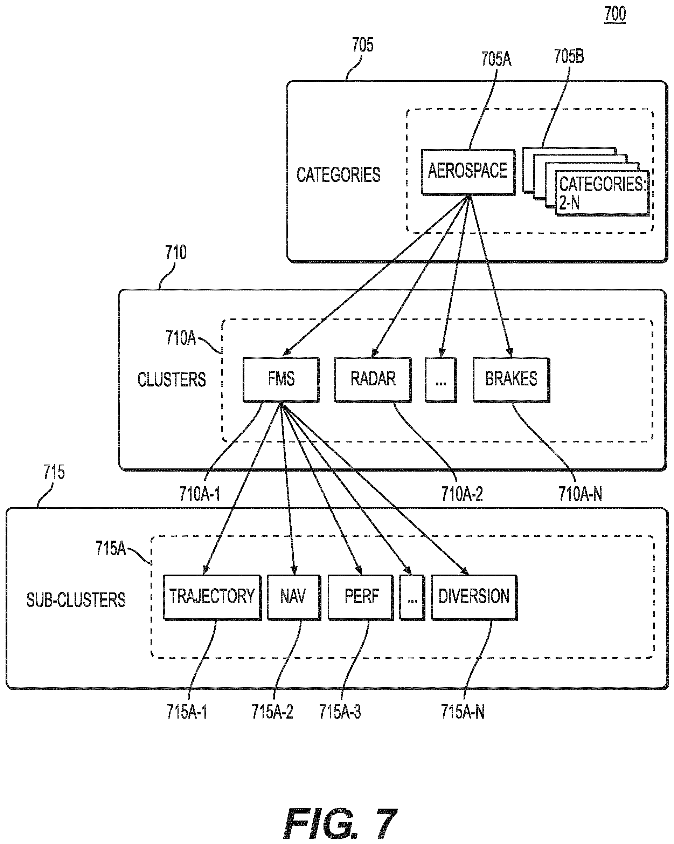

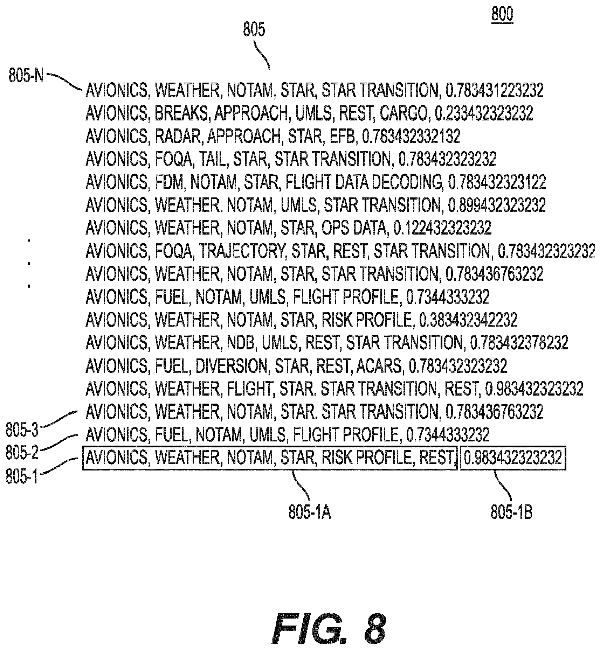

FIGs. 6-8 depict graphics to explain generating API mashups, according to one or more embodiments. Specifically, FIG. 6 may depict an example collection of API data; FIG. 7 may depict an example portion of a tree structure; and FIG. 8 may depict an example list of API mashups with similarity scores.

As shown in FIG. 6, the API mashup generator 244 may access a webpage 600 that includes information for an API, for instance by web crawling an API repository. The API mashup generator 244 may collect text from the webpage 600, such as a title 605, an abstract 615, a summary 625, and/or tags 640. The API mashup generator 244 may then extract one or more category term(s) 610 from the title 605, the abstract 615, the summary 625, and/or the tags 640 (in FIG. 6 the category term 610 may be extracted from the title 605); extract one or more primary category term(s) 620 from the title 605, the abstract 615, the summary 625, and/or the tags 640 (in FIG. 6 the primary category terms 620 may be extracted from the abstract 615); and extract one or more secondary category term(s) 635 and/or descriptions 630 from the title 605, the abstract 615, the summary 625, and/or the tags 640 (in FIG. 6 the secondary category term 635 and the description 630 may be extracted from the summary 625) (collectively, "extracted data"). The API mashup generator 244 may then store the extracted data in association with an identifier of the API in the API DB 246 as collected API data for the API.

FIG. 7 may depict a portion of a tree structure 700 generated by the API mashup generator 244, by performing the first stage to generate a tree structure as discussed above. Specifically, the API mashup generator 244 may obtain API data for a plurality of APIs stored in the API DB 246 and then process the API data for the plurality of APIs to form the tree structure 700. The portion of the tree structure 700 depicted in FIG. 7 may correspond to an aerospace category 705A of categories 705 that also includes other categories 705B. For the aerospace category 705A, the portion of the tree structure 700 depicted in FIG. 7 may depict a plurality of aerospace clusters 710A of all clusters 710 of the tree structure 700. The aerospace clusters 710A may include, for example, a FMS cluster 710A-1 and other clusters, such as a radar cluster 710A-2 to a brakes cluster 710A-N. For the FMS cluster 710A-1, the portion of the tree structure 700 depicted in FIG. 7 may depict a plurality of FMS sub-clusters 715A of all sub-clusters 715 of the tree structure 700. The FMS sub-clusters 715A may include, for example, a trajectory sub-cluster 715A-1 and other sub-clusters, such as a navigation ("NAV") sub-cluster 715A-2, a performance ("PERF") sub-cluster 715A-3 to a diversion sub-cluster 715A-N.

FIG. 8 may depict a result 800 generated by the API mashup generator 244 of performing the second and third stage as discussed above. The result 800 may depict a list of API mashups 805. The list of API mashups may include a first API mashup 805-1, a second API mashup 805-2, a third API mashup 805-3 to a last API mashup 805-N. Each API mashup of the list of API mashups 805 may include a group of APIs 805-1A and a similarity score 805-1B. For ease of viewing, only the group of APIs 805-1A and the similarity score 805-1B for the first API mashup 805-1 have been indicated by a box. The group of APIs 805-1A may correspond to sub-cluster keywords and each may represent an API selected from the list of sub-cluster APIs from the tree structure that are associated with the sub-cluster keyword. The similarity score 805-1B may be determined by the similarity analysis discussed above.

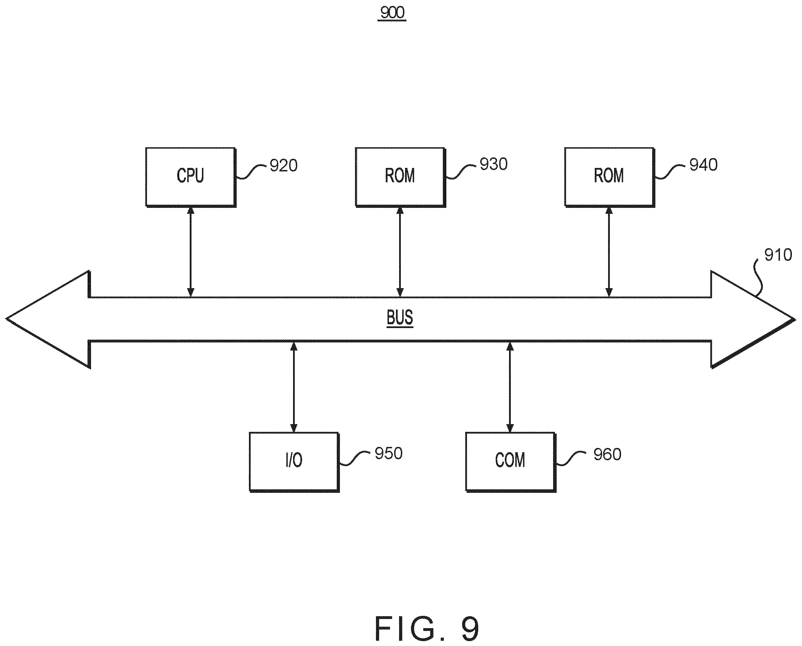

FIG. 9 depicts an example system that may execute techniques presented herein. FIG. 9 is a simplified functional block diagram of a computer that may be configured to execute techniques described herein, according to exemplary embodiments of the present disclosure. Specifically, the computer (or "platform" as it may not be a single physical computer infrastructure) may include a data communication interface 960 for packet data communication. The platform may also include a central processing unit ("CPU") 920, in the form of one or more processors, for executing program instructions. The platform may include an internal communication bus 910, and the platform may also include a program storage and/or a data storage for various data files to be processed and/or communicated by the platform such as ROM 930 and RAM 940, although the system 900 may receive programming and data via network communications. The system 900 also may include input and output ports 950 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

The general discussion of this disclosure provides a brief, general description of a suitable computing environment in which the present disclosure may be implemented. In one embodiment, any of the disclosed systems, methods, and/or graphical user interfaces may be executed by or implemented by a computing system consistent with or similar to that depicted and/or explained in this disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

The terminology used above may be interpreted in its broadest reasonable manner, even though it is being used in conjunction with a detailed description of certain specific examples of the present disclosure. Indeed, certain terms may even be emphasized above; however, any terminology intended to be interpreted in any restricted manner will be overtly and specifically defined as such in this Detailed Description section. Both the foregoing general description and the detailed description are exemplary and explanatory only and are not restrictive of the features, as claimed.

As used herein, the terms "comprises," "comprising," "having," including," or other variations thereof, are intended to cover a non-exclusive inclusion such that a process, method, article, or apparatus that comprises a list of elements does not include only those elements, but may include other elements not expressly listed or inherent to such a process, method, article, or apparatus.

In this disclosure, relative terms, such as, for example, "about," "substantially," "generally," and "approximately" are used to indicate a possible variation of ±10% in a stated value.

The term "exemplary" is used in the sense of "example" rather than "ideal." As used herein, the singular forms "a," "an," and "the" include plural reference unless the context dictates otherwise.

Other embodiments of the disclosure will be apparent to those skilled in the art from consideration of the specification and practice of the invention disclosed herein. It is intended that the specification and examples be considered as exemplary only, with a true scope and spirit of the invention being indicated by the following claims.

## Claims

1. A method for providing application programming interface (API) mashups, the method comprising:
hosting a plurality of certified flight management system (FMS) micro-services associated with a plurality of FMS APIs;
hosting an API mashup generator configured to perform an API mashup process and an API mashup recommendation, the API mashup process generating combinations of APIs that include one or more APIs from the plurality of FMS APIs, other avionics APIs, and/or third party APIs; and
hosting a service mesh to process a user request from a user device for the API mashup recommendation or an invoke micro-service process.

2. The method of claim 1, wherein the performing the API mashup process includes:
obtaining API data for a plurality of APIs, the plurality of APIs including the plurality of FMS APIs, the other avionics APIs, and/or the third party APIs;
processing the API data for the plurality of APIs to form a tree structure; and
generating API mashups based on the tree structure.

3. The method of claim 2, wherein the processing the API data for the plurality of APIs to form the tree structure includes:
generating the tree structure based on text analysis of each of the plurality of APIs to group APIs into sub-clusters of the tree structure, the sub-clusters being branched below clusters of the tree structure, the clusters being branched below categories of the tree structure.

4. The method of claim 3, wherein the generating the API mashups based on the tree structure includes:
obtaining a plurality of example API datasets, each example API dataset corresponding to a category of the categories;
generating sub-cluster keyword combinations based on the plurality of example API datasets and the grouped APIs in the sub-clusters;
generating the API mashups by combining APIs from different sub-clusters when a similarity analysis indicates the APIs from the different sub-clusters can be combined, the different sub-clusters corresponding to sub-cluster keywords of the sub-cluster keyword combinations; and
storing the generated API mashups with the sub-cluster keywords.

5. The method of claim 4, wherein the generating the API mashups based on the tree structure further includes:
ranking the generated API mashups based on priority factors; and/or
generating quantitative indicators for the generated API mashups based on a similarity score and/or the ranking of the generated API mashups.

6. The method of claim 1, wherein the API mashup recommendation includes:
receiving a service query from a user, the service query including an application requirement;
determining whether any of the keywords are within a threshold similarity to the application requirement; and
in response to determining one or more keywords are within the threshold similarity, transmitting a recommendation message to the user, the recommendation message including one or more API mashups that correspond to the one or more keywords.

7. The method of claim 1, wherein the invoke micro-service process includes:
registering a composite service based on the user request;
transmitting a message to the user device indicating the composite service has been registered; the message including an identifier associated with the composite service; and
in response to receiving another user request that includes the identifier, transmitting instructions to micro-services associated with the composite service.

8. A system for providing application programming interface (API) mashups, the system comprising:
a memory storing instructions; and
a processor executing the instructions to perform a process including:
hosting a plurality of certified flight management system (FMS) micro-services associated with a plurality of FMS APIs;
hosting an API mashup generator configured to perform an API mashup process and an API mashup recommendation, the API mashup process generating combinations of APIs that include one or more APIs from the plurality of FMS APIs, other avionics APIs, and/or third party APIs; and
hosting a service mesh to process a user request from a user device for the API mashup recommendation or an invoke micro-service process.

9. The system of claim 8, wherein the performing the API mashup process includes:
obtaining API data for a plurality of APIs, the plurality of APIs including the plurality of FMS APIs, the other avionics APIs, and/or the third party APIs;
processing the API data for the plurality of APIs to form a tree structure; and
generating API mashups based on the tree structure.

10. The system of claim 9, wherein the processing the API data for the plurality of APIs to form the tree structure includes:
generating the tree structure based on text analysis of each of the plurality of APIs to group APIs into sub-clusters of the tree structure, the sub-clusters being branched below clusters of the tree structure, the clusters being branched below categories of the tree structure.
